# EUROPEAN PATENT APPLICATION

(11) **EP 4 742 386 A1**
(43) Date of publication of application: **13.05.2026**
(21) Application number: 25208589.9
(22) Date of filing: 14.10.2025
(51) Int. Cl.: H01M 50/15, H01M 50/564, H01M 50/593

(54) **CAP ASSEMBLY AND SECONDARY BATTERY INCLUDING THE SAME**

(30) Priority: 11.11.2024 KR 20240159010
(71) Applicant: SAMSUNG SDI CO., LTD., Yongin-si, Gyeonggi-do 17084 (KR)
(72) Inventor: Song, Youngjin, Yongin-Si, Gyeonggi-do 17084 (KR); Bae, Kwangsoo, Yongin-Si, Gyeonggi-do 17084 (KR); Yong, Jun-Sun, Yongin-Si, Gyeonggi-do 17084 (KR); Lee, Junhyung, Yongin-Si, Gyeonggi-do 17084 (KR); Kim, Jihwan, Yongin-Si, Gyeonggi-do 17084 (KR); Roh, Heyoungcheoul, Yongin-Si, Gyeonggi-do 17084 (KR); Kyung, Sein, Yongin-Si, Gyeonggi-do 17084 (KR)
(74) Representative: Gulde & Partner

(57) **Abstract**

The present disclosure relates to a cap assembly (100) and a secondary battery (10) including the same. The cap assembly (100) may include a cap plate (110) having a support hole (112) formed therein, an electrode terminal (120) disposed on one surface of the cap plate (110), and an insulator (140) disposed on an other surface of the cap plate (110), a part of which surrounds a perimeter of the support hole (112) of the cap plate (110), and configured to be coupled to the electrode terminal (120) and electrically insulate the electrode terminal (120) from the cap plate (110).

## Description

### BACKGROUND

### 1. Field

The present disclosure relates to a cap assembly and a secondary battery including the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, research is being actively conducted to improve rapid charging and capacity of secondary batteries. In the case of a secondary battery in which a case and a cap assembly are assembled after the electrode assembly is housed in the case, there is a problem in that the space inside the case is reduced due to the thickness of the cap assembly, which is disadvantageous in terms of increasing battery capacity.

The above information disclosed in this Background section is for enhancement of understanding of the background of the present disclosure, and therefore, it may contain information that does not constitute related (or prior) art.

### SUMMARY

The present disclosure provides a cap assembly and a secondary battery including the same to solve the above problems.

These and other aspects and features of the present disclosure will be described in or will be apparent from the following description of embodiments of the present disclosure.

According to one or more embodiments of the present disclosure, a cap assembly may include a cap plate having a support hole formed therein, an electrode terminal disposed on one surface of the cap plate, and an insulator disposed on an other surface of the cap plate, a part of which surrounds a perimeter of the support hole of the cap plate, and configured to be coupled to the electrode terminal and electrically insulate the electrode terminal from the cap plate.

In some embodiments, the insulator may be formed integrally with the cap plate and/or the electrode terminal by insert injection molding.

In some embodiments, the insulator may include a base portion disposed on the other surface of the cap plate, and may include an electrode terminal coupling portion protruding from the base portion and disposed on one (e.g., the one) surface of the cap plate while surrounding the perimeter of the support hole of the cap plate, and to which the electrode terminal may be coupled.

In some embodiments, the base portion may include a base plate spaced apart from the cap plate by a distance (e.g., a predetermined distance) and disposed parallel to the cap plate, and may include a support portion extending in a vertical direction on both (e.g., opposite) surfaces of the base plate and in contact (e.g., close contact) with the cap plate.

In some embodiments, the base portion may further include a coupling portion sunken (e.g., recessed) toward the electrode terminal coupling portion on an opposite surface of a surface where the electrode terminal coupling portion may be formed on the base plate.

In some embodiments, the electrode terminal coupling portion may include a receiving groove into which the electrode terminal may be inserted and which may surround a circumference of the electrode terminal, and may include an insertion hole formed to penetrate the receiving groove.

In some embodiments, at least a part of the cap plate may be formed to be disposed between the base portion and the electrode terminal coupling portion in the insulator.

In some embodiments, the cap plate may further include an insertion groove formed to allow at least a part of the electrode terminal coupling portion to be inserted thereto.

In some embodiments, the cap plate may further include at least one communication hole into which a part of the insulator may be inserted to connect the base portion with the electrode terminal coupling portion.

In some embodiments, the support hole and/or the communication hole may be formed at the insertion groove.

In some embodiments, the cap plate may further include a fastening slit formed along a circumference of at least one of the support hole or the communication hole, and into which a part of the insulator may be inserted.

In some embodiments, the cap assembly may further include a coupling plate disposed between the electrode terminal and the insulator, and that may be electrically connected to the electrode terminal.

In some embodiments, the coupling plate may further include a coupling hole communicating with the support hole of the cap plate.

In some embodiments, the electrode terminal may further include a through hole formed to allow at least a part of the coupling plate to be exposed to an outside.

In some embodiments, the electrode terminal may further include a coupling groove that may be sunken (e.g., recessed) into a shape corresponding to the coupling plate, and into which the coupling plate may be inserted.

According to one or more embodiments of the present disclosure, a secondary battery includes an electrode assembly including a first electrode tab formed on one surface and a second electrode tab formed on an other surface, a case having at least one open side surface and accommodate the electrode assembly, a sub-plate configured to be disposed on the open side surface of the case, be coupled with at least one of the first electrode tab or the second electrode tab, and include a boss portion protruding outwardly, and a cap assembly coupled to the open side surface of the case, the cap assembly may include a cap plate having a support hole formed therein, an electrode terminal disposed on one surface of the cap plate and electrically connected to the sub-plate, and an insulator configured to be disposed on an other surface of the cap plate, a part of which surrounds a circumference of the support hole of the cap plate and may be connected to the electrode terminal, and to electrically insulate the electrode terminal from the cap plate and electrically insulate the cap plate from the electrode assembly.

In some embodiments, the insulator may include a base portion disposed on the other surface of the cap plate, and may include an electrode terminal coupling portion protruding from the base portion and disposed on one surface of the cap plate while surrounding the perimeter of the support hole of the cap plate, and to which the electrode terminal may be coupled.

In some embodiments, the base portion may include a base plate configured to be disposed to face the cap plate at a distance (e.g., a predetermined distance) from the cap plate, may include a support portion configured to extend in a vertical direction on both (e.g., opposite) side surfaces of the base plate and be in contact (e.g., close contact) with the cap plate, and may include a coupling portion which may be sunken (e.g., recessed) toward the electrode terminal coupling portion on an opposite surface of a surface where the electrode terminal coupling portion may be formed on the base plate, and into which the sub-plate may be inserted.

In some embodiments, the electrode terminal coupling portion may include a receiving groove into which the electrode terminal may be inserted and which may surround a circumference of the electrode terminal, and may include an insertion hole which may be formed to penetrate the receiving groove, and into which the boss portion of the sub-plate may be inserted.

In some embodiments, the cap plate may further include a coupling plate disposed between the electrode terminal and the insulator, one side of which may be electrically connected to the electrode terminal, and an other side of which may be joined to the boss portion of the sub-plate.

According to some embodiments of the present disclosure, an insulator that electrically insulates an electrode terminal and a cap plate in a cap assembly of a secondary battery may be formed integrally with the electrode terminal and/or the cap plate by insert injection, thereby reducing the overall thickness of the cap assembly.

According to some embodiments of the present disclosure, an electrode terminal, a cap plate, and an insulator in a cap assembly of a secondary battery may be integrally formed by insert injection, thereby reducing the number of parts and simplifying the assembly process of the secondary battery.

According to some embodiments of the present disclosure, the overall thickness of the cap assembly in the secondary battery may be reduced, thereby securing additional space inside the case, thereby increasing the battery capacity.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The above and other embodiments and features of the present disclosure will become more apparent by describing in detail example embodiments thereof with reference to the attached drawings, in which:
FIG. 1 is a perspective view illustrating an example of a cap assembly according to some embodiments of the present disclosure.
FIG. 2 is an exploded perspective view illustrating an example of a cap assembly according to some embodiments of the present disclosure.
FIG. 3 is a cross-sectional view showing an example of the A-A region in FIG. 1.
FIG. 4 is a cross-sectional view showing an example of the B-B region in FIG. 1.
FIG. 5 is a perspective view showing an example of an insulator in a cap assembly according to some embodiments of the present disclosure.
FIG. 6 is a rear perspective view showing an example of an insulator in a cap assembly according to some embodiments of the present disclosure.
FIG. 7 is a cross-sectional view showing an example of the C-C region in FIG. 5.
FIG. 8 is a perspective view showing an example of a cap plate in a cap assembly according to some embodiments of the present disclosure.
FIG. 9 is a cross-sectional view showing an example of a D-D region in FIG. 8.
FIG. 10 is a perspective view showing an example of an electrode terminal and a coupling plate in a cap assembly according to some embodiments of the present disclosure.
FIG. 11 is a perspective view showing an example of a secondary battery according to some embodiments of the present disclosure.
FIG. 12 is an exploded perspective view showing an example of a secondary battery according to some embodiments of the present disclosure.
FIG. 13 is a cross-sectional view showing an example of a secondary battery according to some embodiments of the present disclosure.
FIG. 14 is a cross-sectional view showing an example of a secondary battery according to another embodiment of the present disclosure.
FIG. 15 is a front view showing an example of a secondary battery according to some embodiments of the present disclosure.
FIG. 16 is a cross-sectional view showing an example of an E-E region in FIG. 15.
FIG. 17 is a cross-sectional view showing an example of an F-F region in FIG. 15.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

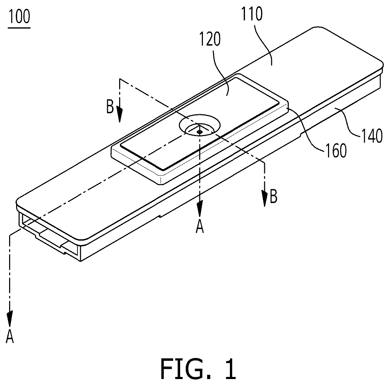

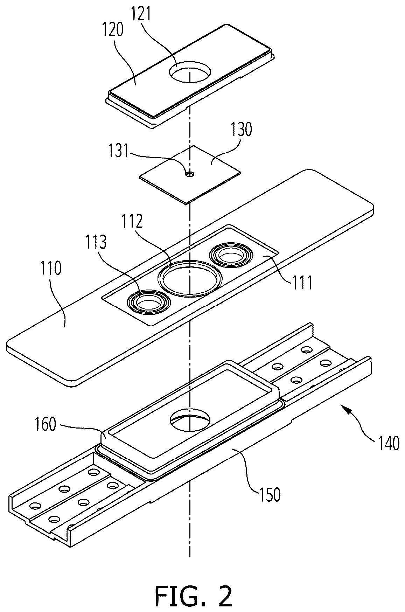

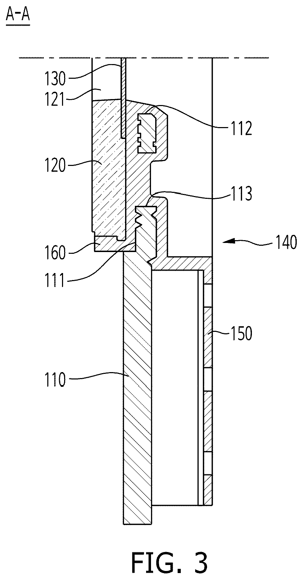

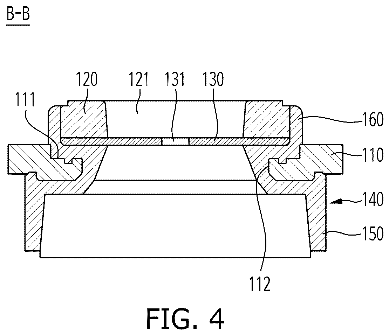

FIG. 1 is a perspective view illustrating an example of a cap assembly according to some embodiments of the present disclosure, and FIG. 2 is an exploded perspective view illustrating an example of a cap assembly according to some embodiments of the present disclosure. FIG. 3 is a cross-sectional view showing an example of the A-A region in FIG. 1, and FIG. 4 is a cross-sectional view showing an example of the B-B region in FIG. 1.

Referring to FIGS. 1 to 4, a cap assembly 100 of a secondary battery according to some embodiments of the present disclosure may include a cap plate 110 in which a support hole 112 is formed, and an electrode terminal 120 disposed on one surface of the cap plate 110. The cap assembly 100 may further include an insulator 140 that is disposed on the other surface of the cap plate 110, has a part thereof disposed to surround the perimeter of the support hole 112 of the cap plate 110 so that the electrode terminal 120 is coupled thereto, and electrically insulates the electrode terminal 120 and the cap plate 110.

In some embodiments, the cap assembly 100 may be configured to be coupled to a case in which the electrode assembly is accommodated to seal the electrode assembly from the outside. Additionally, the cap plate 110 may be coupled to the case, and the electrode terminal 120 may be configured to be electrically connected to the electrode of the electrode assembly. The insulator 140 may be configured to electrically insulate the electrode terminal 120 from the cap plate 110 while electrically insulating the cap plate 110 from the electrode assembly.

The cap assembly 100 may further include a coupling plate 130 disposed between the electrode terminal 120 and the insulator 140 and electrically connected to the electrode terminal 120. The coupling plate 130 may be formed of an electrically conductive metal material and configured to be electrically connected to the electrode terminal 120.

A cap assembly 100 according to some embodiments of the present disclosure may be manufactured by inserting a cap plate 110 and an electrode terminal 120 into a mold, and then injecting a resin forming an insulator 140 into the mold to integrally combine the electrode terminal 120, the cap plate 110, and the insulator 140. That is, the insulator 140 may be formed by insert injection molding and integrally combined with the cap plate 110 and the electrode terminal 120.

As an example, when the cap plate 110 and electrode terminal 120 are inserted into a mold so that the electrode terminal 120 is disposed on one surface of the cap plate 110, and then resin is injected from the other surface of the cap plate 110, the resin may be first filled on the other surface of the cap plate 110. Further, the resin may be filled between the electrode terminal 120 and the cap plate 110 while passing through the support hole 112 of the cap plate 110. The resin passing through the support hole 112 is filled in a form that surrounds the support hole 112, so that the electrode terminal 120, the cap plate 110, and the insulator 140 may be integrally combined. The coupling plate 130 may be inserted into the mold together with the cap plate 110 while being coupled to the electrode terminal 120.

The insert injection method is not limited to this example, and if the electrode terminal 120, the cap plate 110, and the insulator 140 may be integrally formed by insert injection, various methods may be applied.

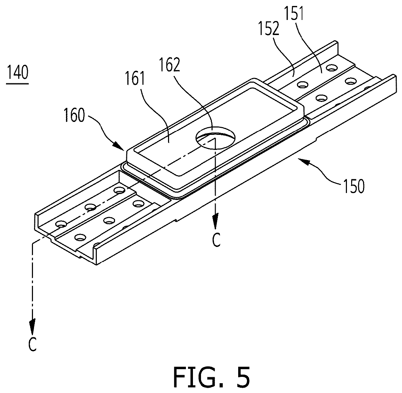

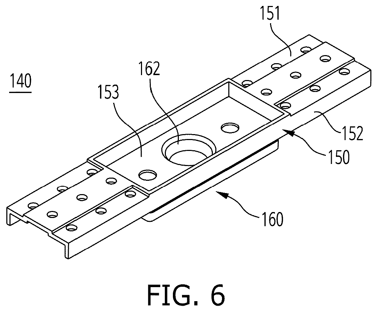

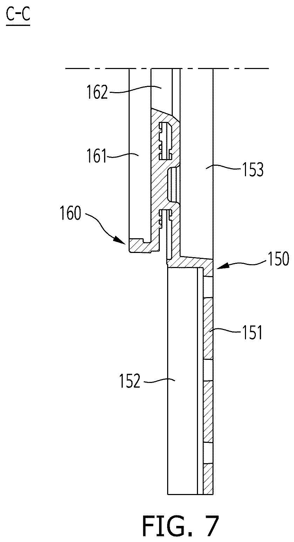

FIG. 5 is a perspective view showing an example of an insulator in a cap assembly according to some embodiments of the present disclosure, and FIG. 6 is a rear perspective view showing an example of an insulator in a cap assembly according to some embodiments of the present disclosure. FIG. 7 is a cross-sectional view showing an example of the C-C region in FIG. 5.

Referring to FIGS. 1 to 7, the insulator 140 may be disposed on the other surface of the cap plate 110, and may be disposed so that a part of the resin may pass through the support hole 112 of the cap plate 110 during insert injection molding, and surround the perimeter of the support hole 112. As the resin passing through the support hole 112 is filled between the electrode terminal 120 and the cap plate 110, the insulator 140 may be joined together with the electrode terminal 120 and the cap plate 110. The insulator 140 may be formed of a resin of insulating material so that the electrode terminal 120 may be electrically insulated from the cap plate 110.

In some embodiments, the insulator 140 may include a base portion 150, which is disposed on the other surface of the cap plate 110, and an electrode terminal coupling portion 160, which is disposed on one surface of the cap plate 110 while protruding from the base portion 150 and surrounding the perimeter of the support hole 112 of the cap plate 110, and to which an electrode terminal 120 is coupled.

The base portion 150 may be formed in a shape corresponding to the shape of the cap plate 110 and may be disposed on the other surface of the cap plate 110. In some embodiments, when the cap assembly 100 is coupled to a case accommodating the electrode assembly, the cap plate 110 and the electrode assembly may be electrically insulated by the base portion 150 disposed on the other surface of the cap plate 110.

In some embodiments, the base portion 150 may include a base plate 151 spaced apart from the cap plate 110 by a predetermined distance and disposed parallel to the cap plate 110, a support portion 152 extending in a vertical direction from both side surfaces of the base plate 151 and in close contact with the cap plate 110, and a coupling portion 153 recessed toward the electrode terminal coupling portion 160 on the opposite surface of the surface on which the electrode terminal coupling portion 160 is formed in the base plate 151.

The base plate 151 may be formed in a shape corresponding to the cap plate 110, and may be disposed parallel to the cap plate 110 at a predetermined distance from the cap plate 110. The support portion 152 may be formed along the longitudinal direction on both side surfaces of the base plate 151 and may be in close contact with the cap plate 110. The support portion 152 may be configured to maintain a spaced gap between the cap plate 110 and the base plate 151.

In some embodiments, when the cap assembly 100 is coupled to the case in which the electrode assembly is housed, the base plate 151 may be in close contact with the electrode assembly, and the support portion 152 may be configured to support the base plate 151 so that the base plate 151 is not deformed toward the cap plate 110 while the base plate 151 is in close contact with the electrode assembly. A sub-plate, which electrically connects the electrode of the electrode assembly with the electrode terminal 120, may be inserted into the coupling portion 153.

The electrode terminal coupling portion 160 may protrude from the central region of the base portion 150, and may be disposed on one surface of the cap plate 110 by penetrating the support hole 112 of the cap plate 110. The electrode terminal coupling portion 160 may be connected to the electrode terminal 120 on one surface of the cap plate 110. The electrode terminal coupling portion 160 may be disposed between the electrode terminal 120 and the cap plate 110 so that the electrode terminal 120 and the cap plate 110 may be electrically insulated.

In some embodiments, when the cap assembly 100 is coupled to a case in which the electrode assembly is housed, the cap plate 110 may be coupled to the case and electrically connected, and the electrode terminal 120 may be electrically connected to an electrode of the electrode assembly. In some embodiments, the electrode connected to the electrode terminal 120 functions with a different polarity from the case, a short circuit may be prevented through the electrode terminal coupling portion 160.

The electrode terminal coupling portion 160 may include a receiving groove 161 into which the electrode terminal 120 is inserted and which surrounds the circumference of the electrode terminal 120, and an insertion hole 162 formed to penetrate the receiving groove 161. In some embodiments, during insert injection molding to form an insulator 140, a resin may be filled in a form that surrounds the circumference of an electrode terminal 120, and the filled resin may be hardened to form a receiving groove 161 that is combined with the electrode terminal 120.

The insertion hole 162 of the electrode terminal coupling portion 160 may be formed to communicate with the support hole 112 of the cap plate 110. In some embodiments, when the cap assembly 100 is coupled to the case in which the electrode assembly is housed, the sub-plate may be inserted into the coupling portion 153, and the boss portion of the sub-plate may be inserted into the insertion hole 162 of the electrode terminal coupling portion 160 to be connected to the electrode terminal 120.

The insulator 140 may be formed so that at least a part of the cap plate 110 is disposed between the base portion 150 and the electrode terminal coupling portion 160. In some embodiments, during insert injection molding to form an insulator 140, the resin may be filled between the electrode terminal 120 and the cap plate 110 while passing through the support hole 112 of the cap plate 110. The resin passing through the support hole 112 may be filled in a form that surrounds the support hole 112, and a base portion 150 may be formed on the other surface of the cap plate 110, and an electrode terminal coupling portion 160 may be formed on one surface of the cap plate 110. In some embodiments, at least a part of the cap plate 110 is formed to be disposed between the base portion 150 and the electrode terminal coupling portion 160, so that the electrode terminal 120, the cap plate 110, and the insulator 140 may be integrally joined.

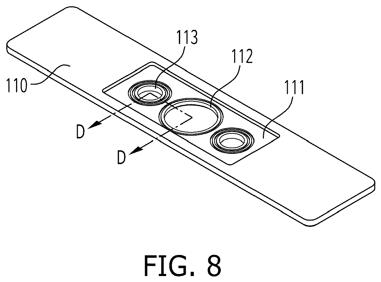

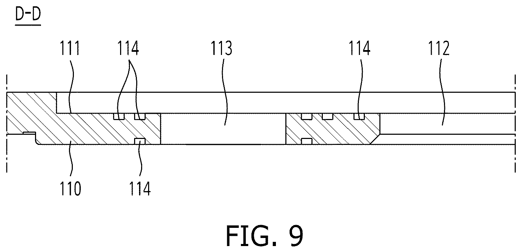

FIG. 8 is a perspective view showing an example of a cap plate in a cap assembly according to some embodiments of the present disclosure, and FIG. 9 is a cross-sectional view showing an example of a D-D region in FIG. 8.

Referring to FIGS. 1 to 9, the cap plate 110 may be formed in a tetragonal flat plate shape, and a support hole 112 may be formed to penetrate the central region. The shape of the cap plate 110 is not limited to a quadrangle, and may vary depending on the shape of the case to which the cap assembly 100 is coupled.

The cap plate 110 may further include an insertion groove 111 formed so that at least a part of the electrode terminal coupling portion 160 is inserted. The insertion groove 111 may be formed in a groove shape by sinking inward on one surface of the cap plate 110. The insertion groove 111 may be formed in a shape corresponding to the shape of the electrode terminal coupling portion 160.

In some embodiments, when insert injection molding is performed to form an insulator 140, resin may be first filled into the insertion groove 111 of the cap plate 110, and then the resin may be filled in a form that surrounds the perimeter of the electrode terminal 120, and the filled resin may be cured so that it may be combined with the electrode terminal 120.

By forming an insertion groove 111 in the cap plate 110, the thickness of the insulator 140 for electrical insulation between the electrode terminal 120 and the cap plate 110 may be secured, and the height at which the electrode terminal 120 protrudes outward from the cap plate 110 may be minimized.

The cap plate 110 may further include at least one communication hole 113, into which a part of the insulator 140 is inserted, to connect the base portion 150 with the electrode terminal coupling portion 160. In some embodiments, as illustrated in FIG. 8, the communication hole 113 may be formed on both sides of the support hole 112 along the longitudinal direction of the cap plate 110 with the support hole 112 as the center. The location and the number of the communication holes 113 are not limited to this example, and a plurality of communication holes 113 may be disposed radially along the perimeter of the support hole 112.

In some embodiments, when resin is filled on the other side of the cap plate 110 during insert injection molding to form an insulator 140, an electrode terminal coupling portion 160 may be formed by the resin passing through the communication hole 113 of the cap plate 110. Because the base portion 150 and the electrode terminal coupling portion 160 are connected to each other through the communication hole 113, the electrode terminal 120, the cap plate 110, and the insulator 140 may be connected as one piece.

The communication hole 113 of the cap plate 110 may be formed in the insertion groove 111 together with the support hole 112. The embodiment is not limited to this example, and the support hole 112 may be formed in the insertion groove 111, and the communication hole 113 may be formed in the remaining area where the insertion groove 111 is not formed. In some embodiments, the communication hole 113 may be formed in both the insertion groove 111 and the remaining area where the insertion groove 111 is not formed.

The cap plate 110 may further include a fastening slit 114 which is formed along the circumference of at least one of the support hole 112 or the communication hole 113, and into which a part of the insulator 140 is inserted. The fastening slit 114 is formed in a circular groove shape so that the resin may be filled into the fastening slit 114 and hardened during insert injection molding to form the insulator 140. A part of the insulator 140 may be filled into the fastening slit 114 and joined to the cap plate 110, thereby improving the bonding force between the insulator 140 and the cap plate 110.

Referring to FIG. 9, In some embodiments, the fastening slit 114 may be formed in a circular groove shape along the perimeter of the support hole 112 with a diameter larger than that of the support hole 112, and may be formed in a circular groove shape along the perimeter of the communication hole 113 with a diameter larger than that of the communication hole 113. In FIG. 9, it is illustrated that one fastening slit 114 is formed around the support hole 112 and two fastening slits 114 are formed around the communication hole 113, on one surface of the cap plate 110, and one fastening slit is formed around the communication hole 113 on the other surface of the cap plate 110, but the number and position of the fastening slits 114 are not limited to this example. In some embodiments, in order to increase the bonding force between the insulator 140 and the cap plate 110, fine unevenness may be formed on the surface of the cap plate 110 in the area where the insulator 140 and the cap plate 110 are bonded.

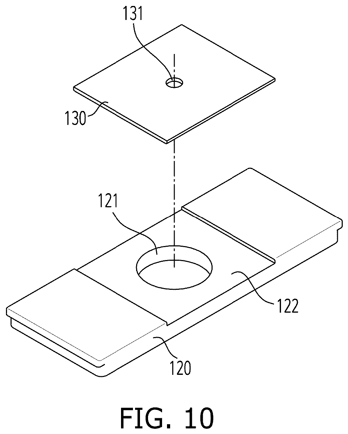

FIG. 10 is a perspective view showing an example of an electrode terminal and a coupling plate in a cap assembly according to some embodiments of the present disclosure.

Referring to FIGS. 1 to 10, a cap assembly 100 according to some embodiments of the present disclosure may further include a coupling plate 130 disposed between an electrode terminal 120 and an insulator 140 and electrically connected to the electrode terminal 120. The coupling plate 130 may be formed of an electrically conductive metal material and configured to be electrically connected to the electrode terminal 120.

The electrode terminal 120 may further include a coupling groove 122 that is sunken into a shape corresponding to the coupling plate 130 on the surface where the coupling plate 130 is disposed. The coupling plate 130 may be inserted into the coupling groove 122 of the electrode terminal 120 and coupled with the electrode terminal 120. The coupling plate 130 may be injection-molded by being inserted into a mold together with the electrode terminal 120 while being joined to the electrode terminal 120.

In some embodiments, when the cap assembly 100 is coupled to the case in which the electrode assembly is housed, the boss portion of the sub-plate may be inserted into the insertion hole 162 of the electrode terminal coupling portion 160 and electrically connected to the coupling plate 130 by being in close contact with the coupling plate 130. The coupling plate 130 may be disposed between the electrode terminal 120 and the sub-plate, and configured to electrically connect the electrode terminal 120 with the sub-plate.

The electrode terminal 120 may further include a through hole 121 formed so that at least a part of the coupling plate 130 is exposed to the outside. A part of the coupling plate 130 is exposed to the outside through the through hole 121 of the electrode terminal 120, and welding is performed on the coupling plate 130 exposed to the outside so that the coupling plate 130 and the boss portion of the sub-plate may be joined by welding.

The coupling plate 130 may further include a coupling hole 131 that communicates with the support hole 112 of the cap plate 110. The coupling hole 131 of the coupling plate 130 may also communicate with the through hole 121 of the electrode terminal 120. In some embodiments, a protrusion protruding outward from the boss portion of the sub-plate may be inserted into a coupling hole 131 of the coupling plate 130. The protrusion of the sub-plate inserted into the coupling hole 131 of the coupling plate 130 may be welded to the cap plate 110.

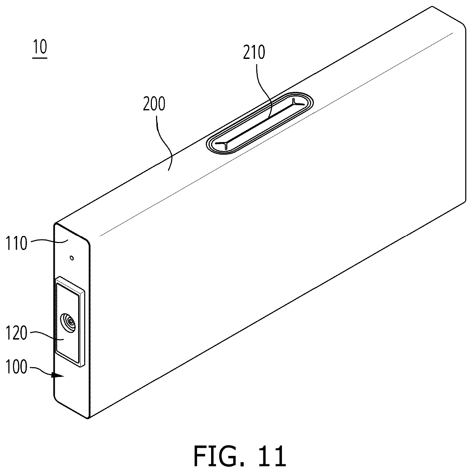

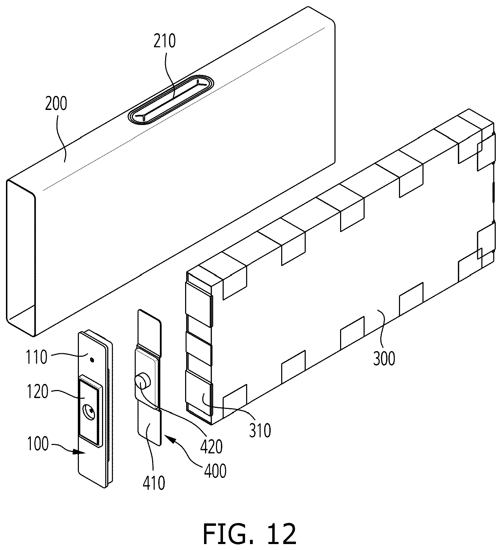

FIG. 11 is a perspective view showing an example of a secondary battery according to some embodiments of the present disclosure. FIG. 12 is an exploded perspective view showing an example of a secondary battery according to some embodiments of the present disclosure.

Referring to FIGS. 11 and 12, a secondary battery 10 according to some embodiments of the present disclosure may include an electrode assembly 300 including a first electrode tab 310 and a second electrode tab 320, a case 200 having at least one of both side surfaces open and accommodating the electrode assembly 300, a sub-plate 400 disposed on the open side surface of the case 200 and coupled with at least one of the first electrode tab 310 or the second electrode tab 320, and a cap assembly 100 coupled to the open side surface of the case 200. The cap assembly 100 may include the same configuration as the cap assembly described with reference to FIGS. 1 to 10.

The case 200 may be formed to have one side surface or both side surfaces open and a hollow space to accommodate an electrode assembly 300 therein. The case 200 may be formed of a conductive metal such as aluminum, aluminum alloy, or nickel-plated steel. The case 200 may be formed of stainless steel SUS.

The case 200 may have a vent portion 210 formed on another side surface perpendicular to the side surface where the opening is formed. The vent portion 210 may be configured to release gas inside the case 200 to the outside when the internal pressure of the case 200 goes beyond a critical range due to the occurrence of a thermal event or the like. Gas, flame, and other substances inside the case 200 may be discharged to the outside through the vent portion 210, thereby reducing the pressure inside the case 200.

The electrode assembly 300 may be formed by winding or stacking a stack of a first electrode, a separator, and a second electrode, which are formed as thin plates or films. When the electrode assembly 300 is a wound stack, a winding axis may be parallel to the longitudinal direction of the case 200. In other embodiments, the electrode assembly 300 may be a stack type rather than a winding type, and the shape of the electrode assembly 300 is not limited in the present disclosure. In addition, the electrode assembly 300 may be a Z-stack electrode assembly 300 in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case 200, and the number of electrode assemblies in the case 200 is not limited in the present disclosure. The first electrode of the electrode assembly 300 may act as a negative electrode, and the second electrode may act as a positive electrode. The reverse is also possible.

The first electrode may be formed by applying a first electrode active material, such as graphite or carbon, to a first electrode current collector formed of a metal foil, such as copper, a copper alloy, nickel, or a nickel alloy. The first electrode may include the first electrode tab 310 (e.g., a first uncoated portion) that is a region to which the first electrode active material is not applied. The first electrode tab 310 may act as a current flow path between the first electrode and the first current collector. In some embodiments, when the first electrode is manufactured, the first electrode tab 310 may be formed by being cut in advance to protrude to one side of the electrode assembly 300, or the first electrode tab 310 may protrude to one side of the electrode assembly 300 more than (e.g., farther than or beyond) the separator without being separately cut.

The second electrode may be formed by applying a second electrode active material, such as a transition metal oxide, on a second electrode current collector formed of a metal foil, such as aluminum or an aluminum alloy. The second electrode may include a second electrode tab 320 (e.g., a second uncoated portion) that is a region to which the second electrode active material is not applied. The second electrode tab 320 may act as a current flow path between the second electrode and the second current collector. In some embodiments, the second electrode tab 320 may be formed by being cut in advance to protrude to the other side (e.g., the opposite side) of the electrode assembly 300 when the second electrode is manufactured, or the second electrode may protrude to the other side of the electrode assembly 300 more than (e.g., farther than or beyond) the separator without being separately cut.

In some embodiments, the first electrode tab 310 may be located on the left side of the electrode assembly 300, and the second electrode tab 320 may be located on the right side of the electrode assembly 300. In other embodiments, the first electrode tab 310 and the second electrode tab 320 may be located on one side of the electrode assembly 300 in the same direction. Here, for convenience of description, the left and right sides are defined according to the secondary battery 10 as oriented in FIG. 12, and the positions thereof may change when the secondary battery 10 is rotated left and right or up and down.

The first electrode tab 310 of the first electrode and the second electrode tab 320 of the second electrode may be respectively positioned at both ends (e.g., opposite ends) of the electrode assembly 300. In some embodiments, the electrode assembly 300 may be accommodated in the case 200 along with an electrolyte. In addition, in the electrode assembly 300, the first current collector and the second current collector may be welded and connected to the first electrode tab 310 of the first electrode and the second electrode tab 320 of the second electrode exposed on both sides, respectively, to then be positioned thereat, respectively.

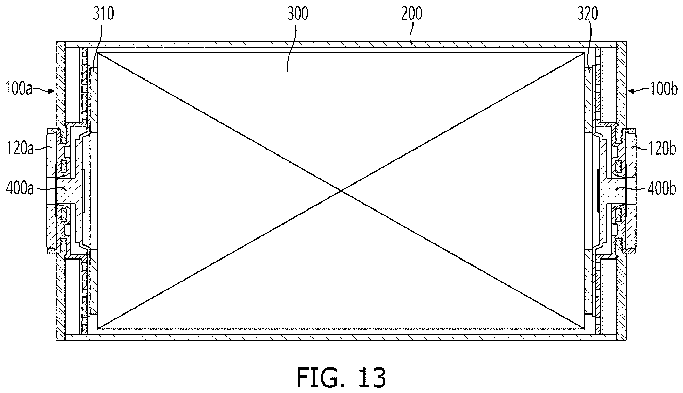

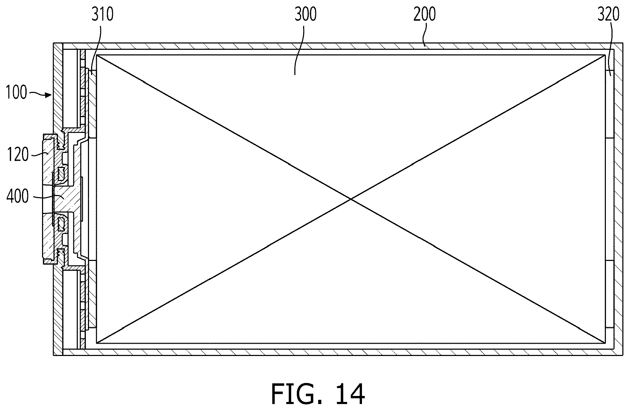

FIG. 13 is a cross-sectional view showing an example of a secondary battery according to some embodiments of the present disclosure, and FIG. 14 is a cross-sectional view showing an example of a secondary battery according to another embodiment of the present disclosure.

Referring to FIG. 13, the case 200 of the secondary battery 10 according to some embodiments of the present disclosure may be opened on both side surfaces. When both side surfaces of the case 200 are opened, two cap assemblies 100a and 100b each coupled to each of two side surfaces of the case 200, and two sub-plates 400a and 400b electrically connecting the electrode assembly 300 and the respective cap assemblies 100a and 100b may be provided.

In some embodiments, an electrode assembly 300 may be accommodated in an open side surface of a case 200, a first sub-plate 400a may be disposed on one side surface of the electrode assembly 300, and then a first cap assembly 100a may be coupled to one side surface of the case 200. Then, after the second sub-plate 400b is disposed on the other side surface of the electrode assembly 300, the second cap assembly 100b may be coupled to the other side surface of the case 200. The first cap assembly 100a and the second cap assembly 100b may have the same configuration as the cap assembly 100 described with reference to FIGS. 1 to 10.

The first sub-plate 400a may electrically connect the first electrode tab 310 of the electrode assembly 300 with the first electrode terminal 120a of the first cap assembly 100a, and the second sub-plate 400b may electrically connect the second electrode tab 320 of the electrode assembly 300 with the second electrode terminal 120b of the second cap assembly 100b. In some embodiments, when the first electrode functions as a positive electrode and the second electrode functions as a negative electrode, the first electrode terminal 120a may function as a positive electrode and the second electrode terminal 120b may function as a negative electrode.

Referring to FIG. 14, a case 200 of a secondary battery 10 according to another embodiment of the present disclosure may have one side surface opened. When one side surface of the case 200 is opened, a cap assembly 100 coupled to one side surface of the case 200, and a sub-plate 400 electrically connecting the electrode assembly 300 with the cap assembly 100 may be provided. The cap assembly 100 may have the same configuration as the cap assembly 100 described with reference to FIGS. 1 to 10.

In some embodiments, an electrode assembly 300 may be received in an open side surface of a case 200, a sub-plate 400 may be disposed on one side surface of the electrode assembly 300, and then a cap assembly 100 may be coupled to one side surface of the case 200. The second electrode tab 320 formed on the other side surface of the electrode assembly 300 may be in close contact with the inner peripheral surface of the case 200.

The sub-plate 400 may electrically connect the first electrode tab 310 of the electrode assembly 300 with the electrode terminal 120 of the cap assembly 100. The second electrode tab 320 of the electrode assembly 300 may be electrically connected to the case 200. In some embodiments, when the first electrode functions as a positive electrode, and the second electrode functions as a negative electrode, the electrode terminal 120 of the cap assembly 100 may function as a positive electrode, and the case 200 may function as a negative electrode.

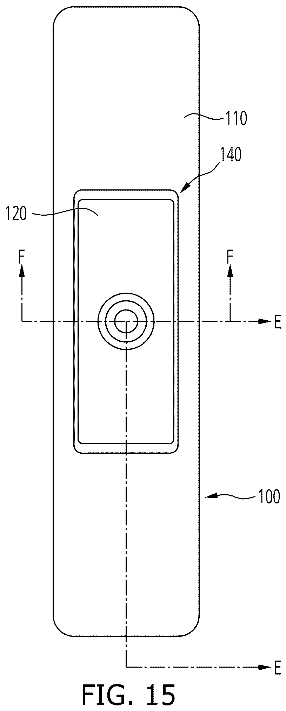

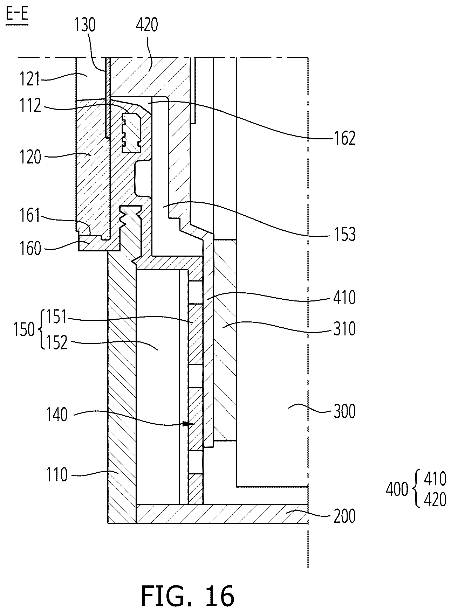

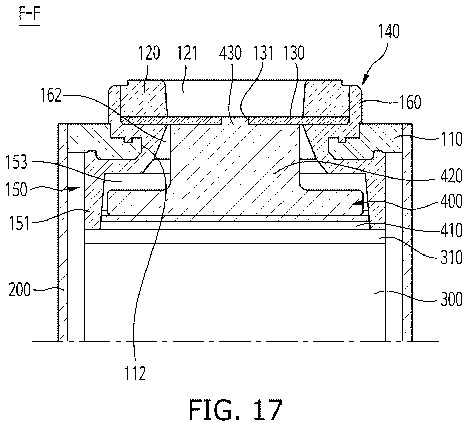

FIG. 15 is a front view showing an example of a secondary battery according to some embodiments of the present disclosure, FIG. 16 is a cross-sectional view showing an example of an E-E region in FIG. 15, and FIG. 17 is a cross-sectional view showing an example of an F-F region in FIG. 15.

Referring to FIGS. 15 to 17, the sub-plate 400 may be configured to electrically connect the first electrode tab 310 of the electrode assembly 300 with the electrode terminal 120 of the cap assembly 100. In some embodiments, the sub-plate 400 may include a tab coupling portion 410 coupled to a first electrode tab 310 of the electrode assembly 300, and a boss portion 420 protruding outwardly from the tab coupling portion 410 and inserted into the cap assembly 100.

A cap assembly 100 may include a cap plate 110 having a support hole 112 formed therein, an electrode terminal 120 disposed on one surface of the cap plate 110, and an insulator 140 disposed on the other surface of the cap plate 110 and having a portion thereof surrounding the periphery of the support hole 112 of the cap plate 110 such that the electrode terminal 120 is coupled thereto and electrically insulates the electrode terminal 120 from the cap plate 110 insulates the cap plate 110 from the electrode assembly 300. The cap assembly 100 may include the same configuration as the cap assembly 100 described with reference to FIGS. 1 to 10.

In some embodiments, the insulator 140 may include a base portion 150 disposed on the other surface of the cap plate 110, and an electrode terminal coupling portion 160 disposed on one surface of the cap plate 110 while protruding from the base portion 150 and surrounding the perimeter of the support hole 112 of the cap plate 110, and to which an electrode terminal 120 is coupled.

The base portion 150 is formed in a shape corresponding to the shape of the cap plate 110 and may be disposed on the other surface of the cap plate 110. In some embodiments, when the cap assembly 100 is coupled to one open side surface of the case 200, the cap plate 110 and the electrode assembly 300 may be electrically insulated by the base portion 150 disposed on the other surface of the cap plate 110.

In some embodiments, the base portion 150 may include a base plate 151 spaced apart from the cap plate 110 by a predetermined distance and disposed parallel to the cap plate 110, a support portion 152 extending in a vertical direction from both side surfaces of the base plate 151 and in close contact with the cap plate 110, and a coupling portion 153 recessed toward the electrode terminal coupling portion 160 on the opposite surface of the surface on which the electrode terminal coupling portion 160 is formed in the base plate 151.

The base plate 151 is formed in a shape corresponding to the cap plate 110, and may be disposed parallel to the cap plate 110 at a predetermined distance from the cap plate 110. The support portion 152 is formed along the longitudinal direction on both side surfaces of the base plate 151 and may be in close contact with the cap plate 110. The support portion 152 may be configured to maintain a spaced gap between the cap plate 110 and the base plate 151.

In some embodiments, when the cap assembly 100 is coupled to an open side surface of the case 200, the base plate 151 is in close contact with the electrode assembly 300, and the support portion 152 may be configured to support the base plate 151 so that it is not deformed toward the cap plate 110 while the base plate 151 is in close contact with the electrode assembly 300. The sub-plate 400 of the electrode assembly 300 may be inserted into the coupling portion 153.

The electrode terminal coupling portion 160 protrudes from the central region of the base portion 150 and may be disposed on one surface of the cap plate 110 by penetrating the support hole 112 of the cap plate 110. The electrode terminal coupling portion 160 may be connected to the electrode terminal 120 on one surface of the cap plate 110. The electrode terminal coupling portion 160 is disposed between the electrode terminal 120 and the cap plate 110 so that the electrode terminal 120 and the cap plate 110 may be electrically insulated.

In some embodiments, when the cap assembly 100 is coupled to one open surface of the case 200, the cap plate 110 may be coupled and electrically connected to the case 200, and the electrode terminal 120 may be electrically connected to the first electrode tab 310 of the electrode assembly 300. In some embodiments, the first electrode tab 310 connected to the electrode terminal 120 functions with a different polarity from the case 200, a short circuit through the electrode terminal coupling portion 160 may be prevented.

The electrode terminal coupling portion 160 may include a receiving groove 161 into which the electrode terminal 120 is inserted and which surrounds the circumference of the electrode terminal 120, and an insertion hole 162 formed to penetrate the receiving groove 161. In some embodiments, during insert injection molding to form an insulator 140, a resin may be filled in a form that surrounds the circumference of an electrode terminal 120, and the filled resin may be hardened to form a receiving groove 161 that is combined with the electrode terminal 120.

The insertion hole 162 of the electrode terminal coupling portion 160 may be formed to communicate with the support hole 112 of the cap plate 110. In some embodiments, when the cap assembly 100 is coupled to one open side surface of the case 200, the sub-plate 400 may be inserted into the coupling portion 153, and the boss portion 420 of the sub-plate 400 may be inserted into the insertion hole 162 of the electrode terminal coupling portion 160 to be connected to the electrode terminal 120.

The cap assembly 100 is disposed between the electrode terminal 120 and the insulator 140, and may further include a coupling plate 130 electrically connected to the electrode terminal 120. The coupling plate 130 may be formed of an electrically conductive metal material and configured to be electrically connected to the electrode terminal 120.

The electrode terminal 120 may further include a coupling groove 122 that is sunken into a shape corresponding to the coupling plate 130 on the surface where the coupling plate 130 is disposed. The coupling plate 130 may be inserted into the coupling groove 122 of the electrode terminal 120 and coupled with the electrode terminal 120.

In some embodiments, when the cap assembly 100 is coupled to one open side surface of the case 200, the boss portion 420 of the sub-plate 400 may be inserted into the insertion hole 162 of the electrode terminal coupling portion 160 and electrically connected to the coupling plate 130 by being in close contact with the coupling plate 130. The coupling plate 130 may be disposed between the electrode terminal 120 and the sub-plate 400 and configured to electrically connect the electrode terminal 120 with the sub-plate 400.

The electrode terminal 120 may further include a through hole 121 formed so that at least a part of the coupling plate 130 is exposed to the outside. A part of the coupling plate 130 is exposed to the outside through the through hole 121 of the electrode terminal 120, and welding is performed on the coupling plate 130 exposed to the outside so that the coupling plate 130 and the boss portion 420 of the sub-plate 400 may be joined by welding.

The coupling plate 130 may further include a coupling hole 131 that communicates with the support hole 112 of the cap plate 110. The coupling hole 131 of the coupling plate 130 may also communicate with the through hole 121 of the electrode terminal 120. In some embodiments, a protrusion 430 protruding outward from the boss portion 420 of the sub-plate 400 may be inserted into the coupling hole 131 of the coupling plate 130. The protrusion 430 of the sub-plate inserted into the coupling hole 131 of the coupling plate 130 may be welded to the cap plate 110.

Although the present disclosure has been described with reference to embodiments and drawings illustrating aspects thereof, the present disclosure is not limited thereto. Various modifications and variations can be made by a person skilled in the art to which the present disclosure belongs within the technical scope of the present disclosure as defined by the appended claims.

## Claims

1. A cap assembly (100) comprising:
a cap plate (110) having a support hole (112) formed therein;
an electrode terminal (120) disposed on one surface of the cap plate (110); and
an insulator (140) disposed on another surface of the cap plate (110), a part of which surrounds a perimeter of the support hole (112) of the cap plate (110), and configured to couple to the electrode terminal (120) and electrically insulate the electrode terminal (120) from the cap plate (110).

2. The cap assembly (100) as claimed in claim 1, wherein the insulator (140) is formed integrally with the cap plate (110) and/or the electrode terminal (120) by insert injection molding.

3. The cap assembly (100) as claimed in claim 1 or 2, wherein the insulator (140) comprises:
a base portion (150) disposed on the other surface of the cap plate (110); and
an electrode terminal coupling portion (160) protruding from the base portion (150) and disposed on the one surface of the cap plate (110) while surrounding the perimeter of the support hole (112) of the cap plate (110), and to which the electrode terminal (120) is coupled.

4. The cap assembly (100) as claimed in claim 3, wherein the base portion (150) comprises:
a base plate (151) spaced apart from the cap plate (110) by a predetermined distance and disposed parallel to the cap plate (110); and
a support portion (152) extending in a vertical direction on opposite surfaces of the base plate (151) and in contact with the cap plate (110).

5. The cap assembly (100) as claimed in claim 3 or 4, wherein the base portion (150) comprises:
a coupling portion (153) recessed toward the electrode terminal coupling portion (160) on an opposite surface of a surface where the electrode terminal coupling portion (160) is formed on the base plate (151).

6. The cap assembly (100) as claimed in any one of claims 3 to 5, wherein the electrode terminal coupling portion (160) comprises:
a receiving groove (161) into which the electrode terminal (120) is inserted and which surrounds a circumference of the electrode terminal (120); and
an insertion hole (162) formed to penetrate the receiving groove (161).

7. The cap assembly (100) as claimed in any one of claims 3 to 6, wherein at least a part of the cap plate (110) is formed to be disposed between the base portion (150) and the electrode terminal coupling portion (160) in the insulator (140).

8. The cap assembly (100) as claimed in any one of claims 3 to 7, wherein the cap plate (110) comprises:
an insertion groove (111) formed to allow at least a part of the electrode terminal coupling portion (160) to be inserted thereto.

9. The cap assembly (100) as claimed in any one of claims 3 to 8, wherein the cap plate (110) comprises:
at least one communication hole (113) into which a part of the insulator (140) is inserted to connect the base portion (150) with the electrode terminal coupling portion (160).

10. The cap assembly (100) as claimed in claim 9, wherein the support hole (112) and the communication hole (113) are formed at the insertion groove (111).

11. The cap assembly (100) as claimed in claim 9 or 10, wherein the cap plate (110) further comprises:
a fastening slit (114) formed along a circumference of at least one of the support hole (112) or the communication hole (113), and into which a part of the insulator (140) is inserted.

12. The cap assembly (100) as claimed in any one of the preceding claims, further comprising:
a coupling plate (130) disposed between the electrode terminal (120) and the insulator (140), and electrically connected to the electrode terminal (120).

13. The cap assembly (100) as claimed in claim 12, wherein the electrode terminal (120) comprises:
a through hole (121) formed to allow at least a part of the coupling plate (130) to be exposed to an outside.

14. The cap assembly (100) as claimed in claim 12 or 13, wherein the electrode terminal (120) comprises:
a coupling groove (122) that is recessed into a shape corresponding to the coupling plate (130), and into which the coupling plate (130) is inserted.

15. A secondary battery (10) comprising:
an electrode assembly (300) comprising a first electrode tab (310) formed on one surface and a second electrode tab (320) formed on another surface;
a case (200) having at least one open side surface and accommodate the electrode assembly (300);
a sub-plate (400) configured to be disposed on the open side surface of the case (200), be coupled with at least one of the first electrode tab (310) or the second electrode tab (320), and comprising a boss portion (420) protruding outwardly; and
a cap assembly (100) coupled to the open side surface of the case (200),
wherein the cap assembly (100) is a cap assembly (100) as claimed in any one of claims 1 to 14.
